(19) Europäisches Patentamt

European Patent Office

Office européen des brevets

(11) **EP 0 941 429 B1**

(12) **EUROPÄISCHE PATENTSCHRIFT**

(45) Veröffentlichungstag und Bekanntmachung des Hinweises auf die Patenterteilung:
**22.05.2002 Patentblatt 2002/21**

(21) Anmeldenummer: **98954300.4**

(22) Anmeldetag: **30.09.1998**

(51) Int Cl.⁷: **F16H 7/04**

(86) Internationale Anmeldenummer:
**PCT/EP98/06209**

(87) Internationale Veröffentlichungsnummer:
**WO 99/17036 (08.04.1999 Gazette 1999/14)**

(54) **ANTRIEB, VORZUGSWEISE TORANTRIEB**

DRIVING MECHANISM, PREFERABLY A DRIVING MECHANISM FOR A DOOR

MECANISME D'ENTRAINEMENT, NOTAMMENT COMMANDE DE PORTAIL

(84) Benannte Vertragsstaaten:
**AT BE CH DE DK ES FR GB GR IE IT LI NL PT SE**

(30) Priorität: **30.09.1997 DE 19743254**
**10.10.1997 DE 19744950**

(43) Veröffentlichungstag der Anmeldung:
**15.09.1999 Patentblatt 1999/37**

(73) Patentinhaber: **Marantec Antriebs- und Steuerungstechnik GmbH & Co. KG.**
**33428 Marienfeld (DE)**

(72) Erfinder: **HÖRMANN, Michael**
**D-33790 Halle (DE)**

(74) Vertreter: **Laufhütte, Dieter, Dr.-Ing. et al**
**Lorenz-Seidler-Gossel**
**Widenmayerstrasse 23**
**80538 München (DE)**

(56) Entgegenhaltungen:
**EP-A- 0 471 159        EP-A- 0 757 190**
**DE-A- 3 624 324        DE-C- 442 387**
**DE-C- 527 420          GB-A- 413 450**
**US-A- 3 630 096**

1     **EP 0 941 429 B1**     2

**Beschreibung**

Die Erfindung betrifft einen Torantrieb mit einem Riemengetriebe, mit einer Antriebsrolle und einer Abtriebsrolle, wobei die Antriebsrolle aus mindestens einem Zylinder besteht, wobei als Antriebsmittel ein Rundriemen, Seil oder dergleichen mehrfach um den Zylinder gewickelt ist und wobei ein Schlitten mit einem Anlenkpunkt für beispielsweise ein Sektionaltor vorgesehen ist, der über das Lasttrum hin- und herschiebbar ist.

Ein derartiger Torantrieb gemäß dem Oberbegriff des Patentanspruchs 1 ist aus der EP 471 159 bekannt Um einen möglichst geringen axialen Verschiebeweg bei der Betätigung des Torantriebes und damit eine geringe axiale Ausdehnung der Antriebsrolle zu erzielen, weist der Antrieb im Bereich der Antriebstrommel eine weitere Trommel auf, über die das Endlosseil geführt wird. Im Bereich der Abtriebsrolle ist eine Feder vorgesehen, mittels derer das Lasttrum des Endlosseils unter Zugspannung gehalten wird. Auf diese Weise läßt sich eine geringe axiale Ausdehnung der Antriebsrolle auch bei großen Verschiebungen realisieren.

Derartige Riemengetriebe als Torantriebe sind ferner als Zahnriemengetriebe im Stand der Technik bekannt. Über ein motorisch angetriebenes Zahnritzel wird ein entsprechender Zahnriemen geführt, der am gegenüberliegenden Ende über eine aus einem Zahnritzel bestehende Umlenkrolle geführt ist. Aufgrund der Dimensionierung der einzelnen Zähne des Zahnriemens und des entsprechenden Zahnritzels ist bei der konstruktiven Gestaltung des Antriebsritzels ein bestimmter Mindestdurchmesser nicht zu unterschreiten, so daß der gesamte Antrieb groß baut. Andererseits sind die zu verwendenden Zahnriemen vergleichsweise teuer.

Eine billigere Ausführungsvariante besteht aus der Verwendung von Rollenketten, die über jeweilige Zahnritzel geführt sind. Rollenketten können zwar hohe Kräfte übertragen, führen aber während des Betriebs zu unakzeptablen Lärmemissionen. Darüber hinaus weisen die hier einzusetzenden Zahnritzel ebenfalls einen bestimmten Mindestdurchmesser auf, der zu einer vergleichsweise großen Dimensionierung des Aufbaus führt.

Aufgabe der vorliegenden Erfindung ist es daher, einen Torantrieb zu schaffen, der einerseits kostengünstig realisierbar ist und der andererseits bei kleiner Baugröße hohe Kräfte übertragen kann.

Erfindungsgemäß wird diese Aufgabe ausgehend von einem Antrieb nach dem Oberbegriff des Anspruchs 1 durch die kennzeichnenden Merkmale des Anspruchs 1 gelöst. Demnach weist der mindestens eine Zylinder der Antriebsrolle an seinen Enden schräg nach innen verlaufende Flansche auf und das Leertrum des Rundriemens, Seils oder dergleichen wird kontinuierlich unter Zugspannung gehalten.

Bei der erfindungsgemäßen Ausbildung des Antriebs wird dasselbe Prinzip verwendet, das bei den insbesondere in der Schiffahrt verwendeten elektrisch angetriebenen Umlenkrollen genutzt wird. Um diese elektrisch angetriebene Umlenkrolle ist ein entsprechendes Trum mehrfach gewickelt. Das Trum rutscht während des Umlaufs der elektrisch angetriebenen Umlenkrolle so lange durch, bis das Ende des Leertrums mit einer Zugbeanspruchung belastet wird. Durch die Zugbeanspruchung auf der Leertrumseite wird ein Reibschluß zwischen dem Trum und der elektrisch angetriebenen Umlenkrolle erzeugt. Die durch ein derartiges Umschlingungsgetriebe mit dem Lasttrum aufnehmbare Kraft berechnet sich nach Eytelwein durch folgende Gleichung:

$$F_1 = F_2 \cdot e^{\mu\alpha},$$

wobei $F_1$ die am Lasttrum angreifende Kraft, $F_2$ die am Leertrum angreifende Kraft, $\mu$ den Reibkoeffizient und $\alpha$ die Umschlingung in Bogenmaß bezeichnet.

Eine einfache Übertragung dieses beispielsweise aus der Schiffahrt bekannten Umschlingungsgetriebes auf einen Garagentorantrieb gab es bislang noch nicht, da bei einem Garagentorantrieb durch die Drehrichtungsumkehr jeweils zwischen Leertrum und Lasttrum gewechselt wurde, wobei das Trum bei Lastumkehr zwangsweise auf der Antriebsrolle durchrutscht. Durch die erfindungsgemäße Ausbildung des Antriebes ist nunmehr sichergestellt, daß der als Antriebsmittel dienende Rundriemen, Seil oder dergleichen, Seil oder dergleichen auch bei Drehrichtungsumkehr kontinuierlich mit der Antriebsrolle im Reibschluß verbleibt.

Bei einer ersten bevorzugten Ausführung der Erfindung besteht die Antriebsrolle aus zwei Zylindern mit an ihren jeweiligen Enden schräg nach innen verlaufenden Flanschen, wobei der Rundriemen, Seil oder dergleichen, Seil oder dergleichen jeweils mehrfach um den jeweiligen Zylinder gewickelt ist und wobei das jeweils das Leertrum bildende Ende um eine federbelastete Umlenkrolle geführt ist. Durch diese konstruktive Ausgestaltung wird in einfacher Art und Weise die notwendige Zugspannung auf das Leertrum ausgeübt. Dabei kann die Umlenkrolle, um die das jeweilige Leertrum geführt ist, zwischen den jeweiligen Enden des Rundriemens, Seils oder dergleichen angeordnet sein, die jeweils das Lasttrum bilden. Alternativ dazu kann die Umlenkrolle, auch außerhalb der das Lasttrum bildenden Enden des Rundriemens, Seils oder dergleichen angeordnet sein. Die jeweils die Federkraft ausübenden Federn können sowohl als Zugfeder wie auch als Druckfeder realisiert sein.

Eine andere alternative Ausgestaltung des erfindungsgemäßen Antriebs besteht darin, daß die Antriebsrolle aus nur einem Zylinder mit an seinen Enden schräg nach innen verlaufenden Flanschen besteht. Dort sind die beiden Enden des Rundriemens, Seils oder dergleichen ebenfalls über feststehende Umlen-

2

kelemente geführt, zwischen denen zwei auf einem quer zur Ausrichtung des Rundriemens, Seils oder dergleichen verschieblichen Schlitten angeordnete Umlenkrollen angeordnet sind, um die der Rundriemen, Seil oder dergleichen, Seil oder dergleichen ebenfalls geführt ist. Der Abstand zwischen den auf dem Schlitten angeordneten Rollen ist dabei kleiner gewählt als derjenige zwischen den sich gegenüberliegenden Umlenkeleden Umlenkelementen. Bei dieser Ausführungsform wird durch entsprechendes Anziehen des Lasttrums dieses auf der Lastseite im wesentlichen gerade zwischen den starren Umlenkelementen und der Umlenkrolle hindurchgezogen. Der querverschiebliche Schlitten wird dabei in Querrichtung auf die Seite zum Lasttrum hingezogen. Das Lasttrum, das im wesentlichen gerade an den Umlenkelementen und der Umlenkrolle entlang läuft, weist eine nur geringe Umschlingung an den feststehenden Umlenkelementen auf, so daß hier nur eine vernachlässigbare Reibkraft ausgeübt wird. Das Umlenkelement auf der Leertrumseite des Schlittens wird durch Verschiebung des Schlittens zur Lasttrumseite hin nach innen gezogen und nimmt damit das Leertrum mit, so daß der Umschlingungswinkel des Leertrums um die feststehenden Umlenkelemente auf der Leertrumseite vergrößert wird. Hierdurch wird eine vergleichsweise hohe Reibkraft erzeugt, die ausreicht, um den notwendigen Reibschluß zwischen dem Trum und der Antriebsrolle zu erzeugen.

Ein weiteres Konstruktionsprinzip zur Weiterbildung des erfindungsgemäßen Antriebs besteht darin, daß die Zugspannung auf das Leertrum jeweils durch zwei versetzt zueinander angeordnete Spannelemente erzeugt wird, die entsprechend einem Fahrradkettenspanner aufgebaut sind.

Besonders vorteilhaft ist es, wenn im Lasttrum zusätzlich eine Zugfeder integriert ist. Durch diese Ausführungsform kann eine nach dem Stand der Technik notwendige Torsionsfeder, die auf der üblichen Federwelle zum Aufrollen des Sektionaltors integriert ist, ersetzt werden. Anstelle der üblichen Aufwickelrolle, auf der hier auch das Trum entsprechend immer aufgewickelt würde, kann hier die Konstruktion mit dem Durchmesser der entsprechend motorisch angetriebenen Rolle beibehalten werden. Durch diese Konstruktion wird die Aufwickelspule mit großem Durchmesser, wie sie beim Stand der Technik notwendig war, ersetzt. Zum anderen kann die nach dem Stand der Technik vorzusehende vergleichsweise teure Torsionsfeder durch eine kostengünstige Linearfeder ersetzt werden.

Weitere Einzelheiten und Vorteile der Erfindung werden anhand der in der Zeichnung dargestellten Ausführungsbeispiele im folgenden erläutert. Es zeigen:

Fig. 1a, b:    eine erste schematische Ausführungsform des erfindungsgemäßen Antriebs in Seitenansicht und Draufsicht,

Fig. 2a, b:    eine vergrößerte Detaildarstellung eines Teils der Fig. 1a, 1b,

Fig. 3a, b:    eine Detailansicht entsprechend derjenigen gemäß Fig. 2 in einer abgewandelten Ausführungsform,

Fig. 4a, b:    eine der Fig. 2a, b entsprechende Ausführungsform einer weiteren Ausführungsvariante der vorliegenden Erfindung,

Fig. 5a, b:    eine der Fig. 2a, b entsprechende Darstellung einer vierten Ausführungsvariante der vorliegenden Erfindung und

Fig. 6:    eine Draufsicht auf eine fünfte Ausführungsform des erfindungsgemäßen Antriebs.

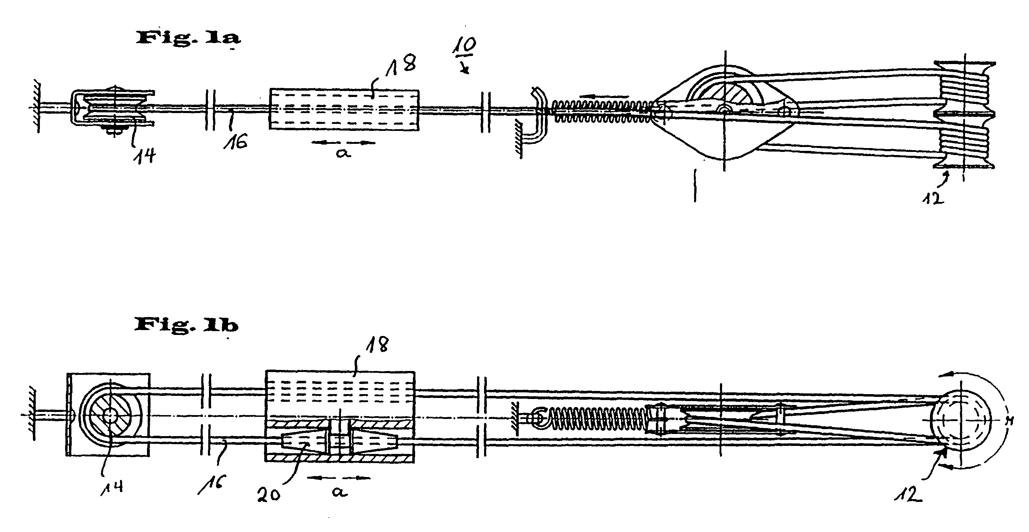

In den Fig. 1a und 1b ist ein Torantrieb 10 gezeigt, der in hier nicht näher dargestellter Art und Weise in eine Montageschiene integriert ist. Der Antrieb 10 besteht aus einem Riemengetriebe mit einer Antriebsrolle 12 und einer als Umlenkrolle ausgebildeten Abtriebsrolle 14. Um die Antriebsrolle 12 und die Abtriebsrolle 14 ist ein endloser Rundriemen, Seil oder dergleichen 16 (Seil) geführt. Über den Rundriemen, Seil oder dergleichen 16 wird ein Schlitten 18 mit einem hier nicht näher dargestellten Anlenkpunkt in Doppelpfeilrichtung a je nach Antriebsrichtung (Doppelpfeil M) der Antriebsrolle 12 hin- und herbewegt. Der Schlitten 18 ist über ein formschlüssig eingreifendes Element 20 mit einem Ende des Rundriemens, Seils oder dergleichen 16 verbunden, wie dies in Fig. 1b dargestellt ist.

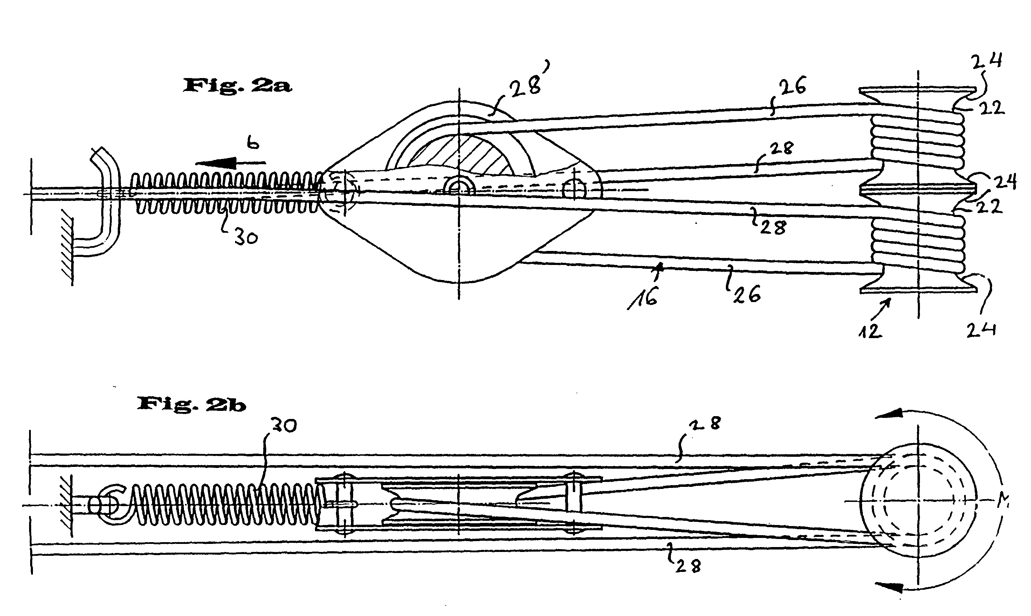

Wie im einzelnen den Fig. 2a und 2b zu entnehmen ist, besteht die Antriebsrolle 12 hier aus zwei nebeneinander auf einer Welle angeordneten Zylindern 22, die an ihren jeweiligen Enden schräg nach innen verlaufende Flansche 24 aufweisen. Der Rundriemen, Seil oder dergleichen 16 ist jeweils vierfach um die jeweiligen Zylinder 22 gewickelt und das jeweils das Leertrum bildende Ende 26 wird um eine federbelastete Umlenkrolle 28 geführt. Im hier dargestellten Ausführungsbeispiel liegt die federbelastete Umlenkrolle 28 zwischen den jeweils das Lasttrum bildenden Ende des Rundriemens, Seils oder dergleichen 16. Im vorliegenden Ausführungsbeispiel wird die Federkraft in Pfeilrichtung b durch eine Zugfeder 30 aufgebracht.

Die über die Umlenkrolle 28 auf das Leertrum 26 aufgebrachte Federkraft reicht aus, um den Reibschluß zwischen dem Rundriemen, Seil oder dergleichen 16 und der Antriebsrolle 12 auch bei Drehrichtungsumkehr in Doppelpfeilrichtung M aufrechtzuerhalten.

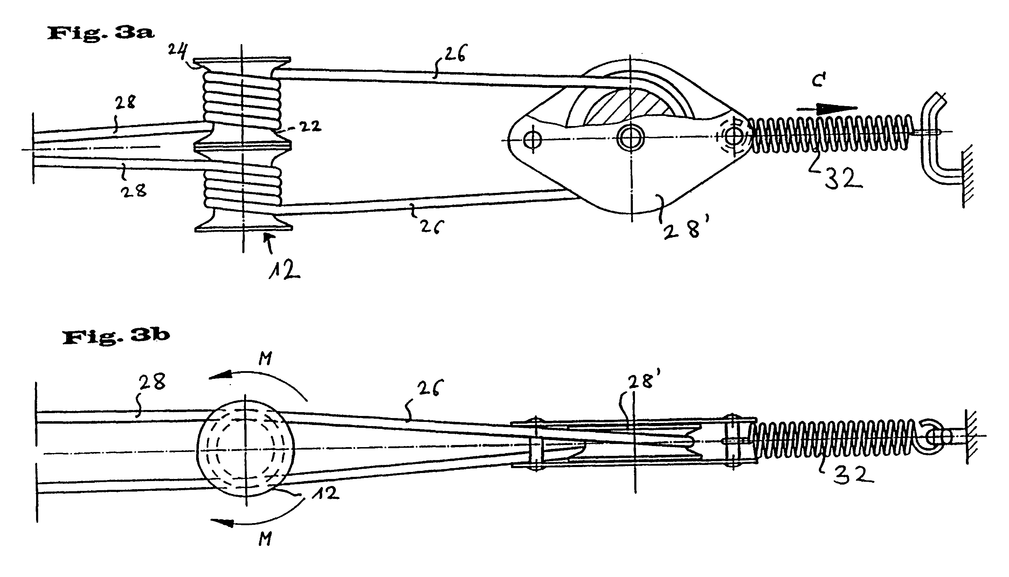

In den Fig. 3a und 3b ist eine Ausführungsform dargestellt, bei der die Umlenkrolle 28' außerhalb der jeweils das Lasttrum bildenden Enden des Rundriemens, Seils oder dergleichen angeordnet ist. Hierdurch ist eine vergleichsweise längere, dafür aber schmälere Bauausführung realisiert. Die Umlenkrolle 28' ist hier ebenfalls durch eine Zugfeder 32 in Pfeilrichtung c federbelastet. Die übrigen Teile entsprechen denjenigen gemäß der Ausführungsform nach Fig. 1 a bzw. 1b, so daß hier auf die vorherige Beschreibung verwiesen werden kann.

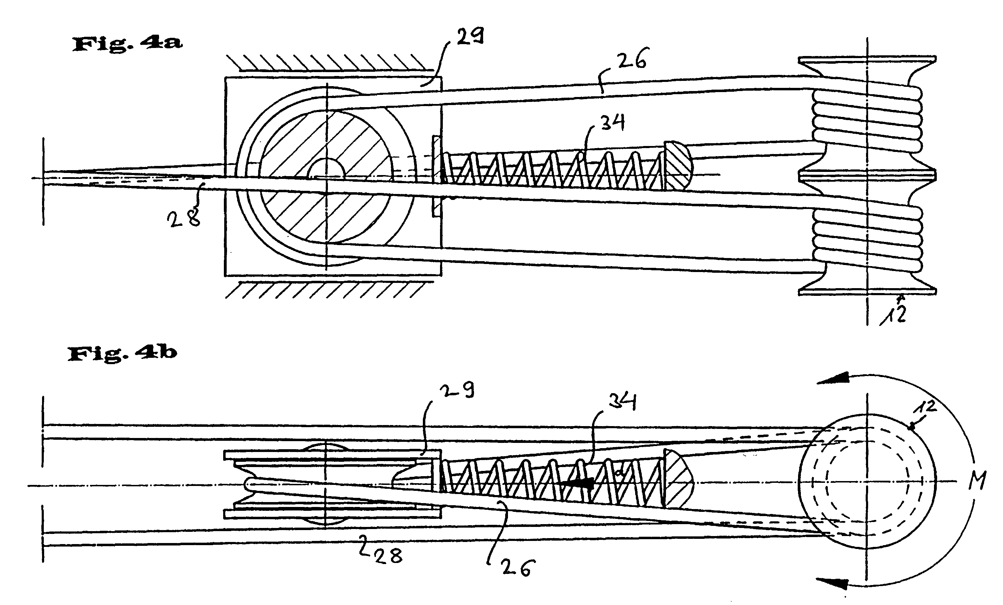

Die Fig. 4a und 4b zeigen eine Ausführungsvariante gemäß derjenigen Konstruktion nach Fig. 2a, 2b, bei der die Umlenkrolle 29 durch eine entsprechend angeordnete Druckfeder 34 in Pfeilrichtung d belastet ist. Die übrigen Teile entsprechen denjenigen der zuvor beschriebenen Ausführungsform, so daß auf diese Beschreibung verwiesen werden kann.

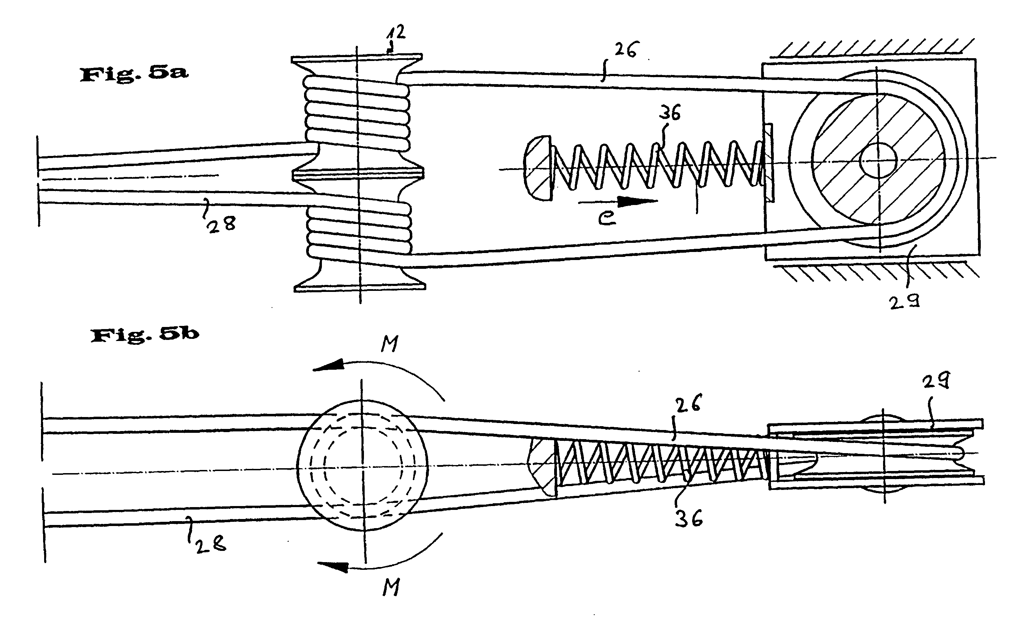

In den Fig. 5a und 5b ist eine Ausführungsform gezeigt, die im wesentlichen derjenigen gemäß den Fig. 3a und 3b entspricht, wobei die Federkraft in dieser Ausführungsform in Pfeilrichtung e durch eine Druckfeder 36 aufgeprägt wird. Die sonstigen Teile entsprechen derjenigen der vorherigen Ausführungsform und sind daher mit identischen Bezugszeichen versehen.

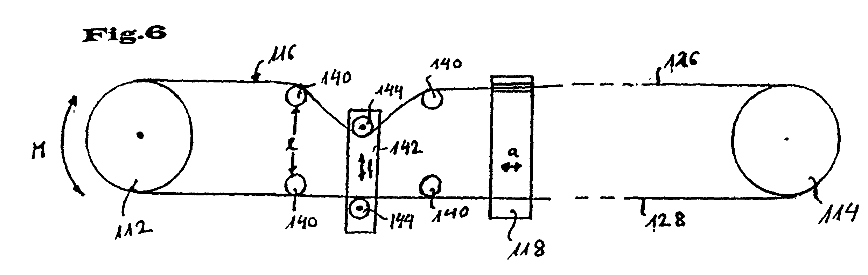

Eine auf einem alternativen Ausführungskonzept beruhende Ausgestaltung der vorliegenden Erfindung ist in Fig. 6 dargestellt. Hier ist die in Doppelpfeilrichtung M motorisch antreibbare Antriebsrolle 112 aus einem Zylinder gebildet, der an seinen Enden schräg nach innen verlaufende Flansche aufweist. Um diesen Zylinder ist ein Rundriemen, Seil oder dergleichen 116 vierfach geschlungen. Gegenüberliegend zur Antriebsrolle 112 ist die ebenfalls aus einer Umlenkrolle gebildete Abtriebsrolle 114 angeordnet. Über den Rundriemen, Seil oder dergleichen 116 ist ein Schlitten oder Schlittenmitnehmer 118 in Doppelpfeilrichtung a entsprechend der Umdrehungsrichtung der Antriebsrolle 112 hin- und herbewegbar. Der Rundriemen, Seil oder dergleichen 116 ist über jeweils feststehende Umlenkelemente 140 geführt. Dabei sind in dem hier dargestellten Ausführungsbeispiel die Umlenkelemente 140 derart angeordnet, daß die parallel verlaufenden Enden des Rundriemens, Seils oder dergleichen tangential an ihnen anliegen. Zwischen jeweils zwei sich gegenüberliegenden Umlenkelementen 114 sind auf einem in Pfeilrichtung f querverschieblich angeordneten Schlitten 142 drehbar angeordnete Umlenkrollen 144 vorgesehen. Um die Umlenkrolle 144 wird der Rundriemen, Seil oder dergleichen 116 in der in Fig. 6 dargestellten Art und Weise geführt. Der Abstand zwischen den auf dem Schlitten 142 gelagerten drehbaren Umlenkrollen 144 ist kleiner als der Abstand I zwischen den feststehenden Umlenkelementen 140.

In der Fig. 6 verläuft der Rundriemen, Seil oder dergleichen 116 auf der einen Seite im wesentlichen gerade zwischen den Umlenkelementen 140 und der Umlenkrolle 144. Auf dieser Seite bildet der Rundriemen, Seil oder dergleichen gerade das Lasttrum 128, während auf der gegenüberliegenden Seite der Rundriemen, Seil oder dergleichen 116 das Leertrum 116 bildet. Durch das Aufprägen der Last wird der das Lasttrum 128 bildende Rundriemen, Seil oder dergleichen 116 gerade gezogen, so daß er den Schlitten 142 in die hier dargestellte Lage verschiebt und damit das Leertrum 126 entsprechend der Darstellung gemäß der Fig. 6 um die Umlenkelemente 140 und die Umlenkrolle 144 derart umlenkt, daß an den Umlenkelementen 140 ein vergleichsweise größerer Umschlingungswinkel entsteht. Dieser vergrößerte Umschlingungswinkel erzeugt eine hinreichend große Kraft, um den Reibschluß zwischen dem Rundriemen, Seil oder dergleichen 116 und der Umlenkrolle 112 sicherzustellen. Bei Drehrichtungsumkehr in Doppelpfeilrichtung M ist aufgrund der unmittelbar erfolgenden Lastumkehr durch entsprechende Querverschiebung des Schlittens 142 in Pfeilrichtung f eine unmittelbare kinematische Umkehr verursacht, so daß Lasttrum und Leertrum gewechselt werden können, ohne daß es beim Übergang zu einem Zeitintervall kommt, in welchem der Reibschluß zwischen dem Rundriemen, Seil oder dergleichen 116 und der Antriebsrolle 112 nicht mehr aufrechterhalten ist.

**Patentansprüche**

1.    Torantrieb (10) mit einem Riemengetriebe, mit einer Antriebsrolle (12, 112) und einer Abtriebsrolle (14, 114), wobei die Antriebsrolle (12, 112) aus mindestens einem Zylinder (22) besteht, wobei als Antriebsmittel ein Rundriemen, Seil oder dergleichen (16, 116) mehrfach um den Zylinder (22) gewickelt ist und wobei ein Schlitten (18, 118) mit einem Anlenkpunkt für beispielsweise ein Sektionaltor vorgesehen ist, der über das Lasttrum hin- und herschiebbar ist,
**dadurch gekennzeichnet,**
**daß** der mindestens eine Zylinder (22) der Antriebsrolle (12, 112) an seinen Enden schräg nach innen verlaufende Flansche (24) aufweist und daß das Leertrum (26, 126) des Rundriemens, Seils oder dergleichen (16, 116) kontinuierlich unter Zugspannung gehalten wird.

2.    Torantrieb (10) nach Anspruch 1, **dadurch gekennzeichnet, daß** die Antriebsrolle (12, 112) aus zwei Zylindern (22) mit an ihren jeweiligen Enden schräg nach innen verlaufenden Flanschen (24) besteht, wobei der Rundriemen, Seil oder dergleichen (16, 116) jeweils mehrfach um den jeweiligen Zylinder (22) gewickelt ist und wobei das jeweils das Leertrum (26) bildende Ende um eine federbelastete Umlenkrolle (28, 28', 29) geführt ist.

3.    Torantrieb (10) nach Anspruch 2, **dadurch gekennzeichnet, daß** die Umlenkrolle (28, 28', 29), um die das Leertrum (26) geführt ist, zwischen den jeweils das Lasttrum bildenden Enden des Rundriemens, Seils oder dergleichen (16) liegt.

4. Torantrieb (10) nach Anspruch 2, **dadurch gekennzeichnet, daß** die Umlenkrolle (28, 28', 29), um die das Leertrum (26) geführt ist, außerhalb der das Lasttrum bildenden Enden des Rundriemens, Seils oder dergleichen (16) liegt.

5. Torantrieb (10) nach Anspruch 3 oder 4, **dadurch gekennzeichnet, daß** die Umlenkrolle (28, 28', 29) durch eine als Zugfeder (30, 32) ausgebildete Feder federbelastet ist.

6. Torantrieb (10) nach Anspruch 3 oder 4, **dadurch gekennzeichnet, daß** die Umlenkrolle (28, 28', 29) durch eine als Druckfeder (34, 36) ausgebildete Feder federbelastet ist.

7. Torantrieb nach Anspruch 3, **dadurch gekennzeichnet, daß** die Antriebsrolle (112) aus einem Zylinder mit an seinen Enden schräg nach innen verlaufenden Flanschen besteht, daß beide Enden des Rundriemens, Seils oder dergleichen (116) über feststehende Umlenkelemente (140) geführt werden, zwischen denen jeweils auf einem querverschieblichen Schlitten (142) angeordnet Umlenkrollen (144), um die der Rundriemen, Seil oder dergleichen (116) ebenfalls geführt ist, angeordnet sind, wobei der Abstand zwischen den auf dem Schlitten (142) angeordneten Rollen (144) kleiner ist als der Abstand (I) der sich gegenüberliegenden Umlenkrolle (140).

8. Torantrieb (10) nach Anspruch 1, **dadurch gekennzeichnet, daß** die Erzeugung der Zugspannung auf das Leertrum (26) durch zwei jeweils versetzt zueinander angeordnete Spannelemente erzeugt wird, die entsprechend einem Fahrradkettenspanner aufgebaut sind.

9. Torantrieb (10) nach einem oder mehreren der Ansprüche 1-8, **dadurch gekennzeichnet, daß** im Lasttrum eine Zugfeder integriert ist.

**Claims**

1. Door drive (10) having a belt drive mechanism, with a drive roller (12, 112) and an output roller (14, 114), the drive roller (12, 112) comprising at least one cylinder (22), a round belt, cable or the like (16, 116) being wound, as drive means, a number of times around the cylinder (22), and a carriage (18, 118) being provided with a point of articulation for, for example, a sectional door, it being possible for this to be displaced back and forth via the load strand, **characterized in that** the at least one cylinder (22) of the drive roller (12, 112) has obliquely inwardly running flanges (24) at its ends, and **in that** the idling strand (26, 126) of the round belt, cable or the like (16, 116) is retained continuously under tensile stressing.

2. Door drive (10) according to Claim 1, **characterized in that** the drive roller (12, 112) comprises two cylinders (22) with obliquely inwardly running flanges (24) at the respective ends thereof, the round belt, cable or the like (16, 116) being wound in each case a number of times around the respective cylinder (22), and the end which forms the idling strand (26) in each case being guided around a spring-loaded deflecting roller (28, 28', 29).

3. Door drive (10) according to Claim 2, **characterized in that** the deflecting roller (28, 28', 29), around which the idling strand (26) is guided, is located between those ends of the round belt, cable or the like (16) which form the load strand in each case.

4. Door drive (10) according to Claim 2, **characterized in that** the deflecting roller (28, 28', 29), around which the idling strand (26) is guided, is located outside those ends of the round belt, cable or the like (16) which form the load strand.

5. Door drive (10) according to Claim 3 or 4, **characterized in that** the deflecting roller (28, 28', 29) is spring-loaded by a spring designed as a tension spring (30, 32).

6. Door drive (10) according to Claim 3 or 4, **characterized in that** the deflecting roller (28, 28', 29) is spring-loaded by a spring designed as a compression spring (34, 36).

7. Door drive according to Claim 3, **characterized in that** the drive roller (112) comprises a cylinder with obliquely inwardly running flanges at its ends, **in that** the two ends of the round belt, cable or the like (116) are guided over fixed deflecting elements (140) between which deflecting rollers (114), each arranged on a transversely displaceable carriage (142) and around which the round belt, cable or the like (116) is likewise guided, are arranged, the spacing between the rollers (114) arranged on the carriage (142) being smaller than the spacing (1) between the mutually opposite deflecting rollers (140).

8. Door drive (10) according to Claim 1, **characterized in that** the tensile stressing to which the idling strand (26) is subjected is produced by two tensioning elements which are offset in relation to one another in each case and are constructed in a manner corresponding to a bicycle chain tension adjuster.

9. Door drive (10) according to one or more of Claims 1-8, **characterized in that** a tension spring is integrated in the load strand.

## Revendications

1. Dispositif d'entraînement de portail (10) avec un mécanisme de transmission à courroie, avec un galet menant (12, 112) et un galet mené (14, 114), où le galet menant (12, 112) est constitué d'au moins un cylindre (22) où, comme moyen d'entraînement, une courroie ronde, un câble ou analogue (16, 116) est enroulé plusieurs fois autour du cylindre (22) et où est prévu un chariot (18, 118) avec un point d'articulation, par exemple, pour une porte sectionnée, qui est déplaçable selon un mouvement de va-et-vient sur le brin de charge, **caractérisé en ce qu'**au moins un cylindre (22) précité du galet menant (12, 112) présente à ses extrémités des flasques (24) s'étendant en biais vers l'intérieur, et **en ce que** le brin vide (26, 126) de la courroie ronde, du câble ou analogue (16, 116) est maintenu continuellement sous contrainte de traction.

2. Dispositif d'entraînement de portail (10) selon la revendication 1, **caractérisé en ce que** le galet menant (12, 112) est constitué de deux cylindres (22) avec, à leurs extrémités respectives, des flasques s'étendant en biais vers l'intérieur (24), où la courroie ronde, le câble ou analogue (16, 116) est enroulé respectivement plusieurs fois autour du cylindre respectif (22), et où l'extrémité formant respectivement le brin vide (26) est guidée autour d'un galet de renvoi (28, 28', 29) chargé par ressort.

3. Dispositif d'entraînement de portail (10) selon la revendication 2, **caractérisé en ce que** le galet de renvoi (28, 28', 29), autour duquel est guidé le brin vide (26), se situe entre les extrémités de la courroie ronde, du câble ou analogue (16) formant respectivement le brin de charge.

4. Dispositif d'entraînement de portail (10) selon la revendication 2, **caractérisé en ce que** le galet de renvoi (28, 28', 29) autour duquel est guidé le brin vide (26) se situe à l'extérieur des extrémités de la courroie ronde, du câble ou analogue (16) formant le brin de charge.

5. Dispositif d'entraînement de portail (10) selon la revendication 3 ou 4, **caractérisé en ce que** le galet de renvoi (28, 28', 29) est chargé par un ressort réalisé comme ressort de traction (30, 32).

6. Dispositif d'entraînement de portail (10) selon la revendication 3 ou 4, **caractérisé en ce que** le galet de renvoi (28, 28', 29) est chargé par un ressort réalisé comme ressort de pression (34, 36).

7. Dispositif d'entraînement de portail selon la revendication 3, **caractérisé en ce que** le galet menant (112) est constitué d'un cylindre avec, à ses extrémités, des flasques s'étendant en biais vers l'intérieur, **en ce que** les deux extrémités de la courroie ronde, du câble ou analogue (116) sont guidées sur des éléments de renvoi fixes (140) entre lesquels sont disposés, chacun sur un chariot déplaçable transversalement (142), des galets de renvoi (144) autour desquels la courroie ronde, le câble ou analogue (116) est également guidé, où l'écart entre les rouleaux (144) disposés sur le chariot (142) est plus petit que l'écart (1) des galets de renvoi opposés (140).

8. Dispositif d'entraînement de portail (10) selon la revendication 1, **caractérisé en ce que** la contrainte de traction est produite sur le brin vide (26) par deux éléments tendeurs décalés respectivement l'un à l'autre qui sont construits à la manière d'un tendeur de chaîne de bicyclette.

9. Dispositif d'entraînement de portail (10) selon l'une ou plusieurs des revendications 1 à 8, **caractérisé en ce qu'**un ressort de traction est intégré dans le brin de charge.

Fig. 1a

Fig. 1b

Fig. 2a

Fig. 2b

**Fig. 3a**

**Fig. 3b**

Fig. 4a

Fig. 4b

Fig. 5a

Fig. 5b

EP 0 941 429 B1

Fig.6